# EUROPÄISCHE PATENTANMELDUNG

(11) **EP 3 255 769 A1**
(43) Veröffentlichungstag der Anmeldung: **13.12.2017**
(21) Anmeldenummer: 17174589.6
(22) Anmeldetag: 06.06.2017
(51) Int. Cl.: H02M 1/42, H02M 3/335, H02M 1/00

(54) **SCHALTNETZTEIL**

(30) Priorität: 06.06.2016 DE 102016110427
(71) Anmelder: RK Rose + Krieger GmbH Verbindungs- und Positioniersysteme, 32423 Minden (DE)
(72) Erfinder: GAARMANN, Dirk, 31688 Nienstädt (DE)
(74) Vertreter: Kleine, Hubertus

(57) **Zusammenfassung**

Die Erfindung betrifft ein Schaltnetzteil mit einem Abwärts-Sperrwandler (10) mit einem Übertrager (11) für Ausgangsleistungen von mehr als 100 W. Das Schaltnetzteil zeichnet sich dadurch aus, dass es einstufig ausgeführt ist, wobei der Abwärts-Sperrwandler (10) eine integrierte Leistungsfaktorkorrektur aufweist und wobei parallel zu einer Primärwicklung (111) des Übertragers (11) eine Spannungsbegrenzungsschaltung (14) geschaltet ist, die einen aktiven Halbleiterschalter (142) aufweist.

## Beschreibung

Die Erfindung betrifft ein Schaltnetzteil mit einem Abwärts-Sperrwandler mit einem Übertrager für Ausgangsleistungen von mehr als 100 Watt (W).

Bei einem konventionellen Netzteil wird ein Transformator verwendet, um eine Eingangs-Wechselspannung in eine Spannung anderer Höhe zur transformieren, die danach gleichgerichtet und gegebenenfalls stabilisiert als Ausgangsgleichspannung abgegeben wird.

Bei Schaltnetzteilen wird dagegen die Eingangs-Wechselspannung zunächst gleichgerichtet und dann in eine Wechselspannung (oder pulsierende Spannung) mit höherer Frequenz umgerichtet, die unter Verwendung einer Speicherinduktivität in eine Spannung anderer Höhe gewandelt wird. Soll eine galvanische Trennung erfolgen, kann die Speicherinduktivität durch eine Primärspule eines Übertragers gebildet sein. Aufgrund der gegenüber der Netzfrequenz höheren Frequenz, mit der der Übertrager betrieben wird, kann er deutlich kleiner und damit leichter und materialsparender ausgebildet sein als ein konventioneller Transformator. Die gewandelte Spannung wird sekundärseitig wiederum gleichgerichtet und gesiebt. Dabei kann vorgesehen sein, ein die Höhe der Ausgangsspannung widerspiegelndes Signal, gegebenenfalls wiederum galvanisch getrennt, zurück zu führen, um die Ausgangsspannung durch Variationen der primärseitigen Ansteuerung des Übertragers auf einen gewünschten Wert einzustellen.

Für kleine Leistungen von unter 100 W sind Schaltnetzteile bekannt, die einstufig aufgebaut sind und lediglich einen Abwärts-Sperrwandler aufweisen. Bei einem Sperrwandler ist ein getaktetes Schaltorgan mit der Speicherinduktivität des Wandlers reihenverschaltet angeordnet. Bei Verwendung in einem Netzteil dient der Übertrager selbst als Speicherinduktivität.

Ohne weitere Korrekturmaßnahmen sind die Eingangsströme derartiger einstufiger Schaltnetzteile mit Sperrwandler nicht sinusförmig und phasenverschoben zum sinusförmigen Eingangsspannungsverlauf. Insbesondere weisen sie höherfrequente Anteile auf (Oberschwingungen) die in anderen elektrischen oder elektronischen Geräten Störungen verursachen können. Quantitativ lässt sich dieses durch den sogenannten Leistungsfaktor beschreiben, der das Verhältnis des Betrags der Wirkleistung zur Scheinleistung eines Verbrauchers, also in diesem Fall des Schaltnetzteils, angibt. Der Leistungsfaktor kann Werte zwischen 0 und 1 annehmen, wobei 1 der Idealwert ist, bei dem weder Oberschwingungen vorliegen, noch der Eingangsstrom ein Phasenunterschied zur Eingangsspannung zeigt.

Für Schaltnetzteile mit einer höheren Ausgangsleistung, beispielsweise einer Ausgangsleistung von mehr als 100 W, ist in manchen Gesetzesräumen, z.B. der Europäischen Union, der maximal zulässige Anteil an Oberschwingungen normativ beschränkt. In der Europäischen Union sind diesbezüglich die Grundnorm EN 61000 und zahlreichen daraus abgeleiteten Produktnormen einschlägig.

Um bei Schaltnetzteilen höherer Leistung diese Normen zu erfüllen, ist ein zweistufiger Aufbau der Schaltnetzteile üblich, wobei dem eigentlichen Abwärts-Sperrwandler eine Leistungsfaktorkorrekturstufe (PFC - Power Factor Correction) vorgeschaltet ist. Diese PFC-Stufe ist in der Regel ein Aufwärtswandler, der einen Kondensator auf eine Zwischenkreisspannung auflädt, die höher ist als eine Scheitelspannung der Netz-Wechselspannung.

Bei einem Aufwärtswandler ist eine Induktivität (Speicherdrossel) in Reihe mit einer Freilaufdiode geschaltet, wobei ein Schaltorgan den Mittelabgriff zwischen Spule und Freilaufdiode gegen Masse schaltet. Das Schaltorgan wird getaktet angesteuert, wobei die Taktung so erfolgt, dass deren Eingangsstrom der Anordnung möglichst proportional zur Eingangsspannung ist. Auf diese Weise wird ein hoher Leistungsfaktor nahe 1 erzielt. Zusätzlich ist üblicher Weise eingangsseitig bei dem Schaltnetzteil ein passives EMV (Elektromagnetische Verträglichkeit)-Filter vorgesehen.

Mit diesem üblichen zweistufigen Schaltungskonzept können Schaltnetzteile mit Abwärts-Sperrwandler in einem Leistungsbereich ab 100 W zwar die geforderten Leistungsfaktorwerte erreichen, ihr Aufbau ist jedoch schaltungstechnisch deutlich aufwändiger, was zu höheren Kosten und auch zu einem höheren Platzbedarf für das Schaltungsnetzteil führt.

Aus der Druckschrift US 5,757,626 A ist ein einstufiges Schaltnetzteil bekannt, bei dem anstelle eines Abwärts-Sperrwandlers ein sogenannter Cuk-Wandler eingesetzt wird. Bei dieser Schaltungsanordnung wird auch ohne zusätzliche Korrekturschaltung ein hoher Leistungsfaktor erzielt. Der Cuk-Wandler benötigt jedoch zwei Drosselspulen und einen Kondensator als Energiespeicher und ist daher nur material- und kostenintensiv realisierbar.

Aus der Druckschrift EP 1 500 999 B1 ist eine weitere einstufige Wandlerschaltung bekannt, mit der sich auch in einem Leistungsbereich von mehr als 100 W ein hoher Leistungsfaktor erzielen lässt. Zu diesem Zweck wird ein Wandler eingesetzt, bei dem ein Übertrager primärseitig eine Primärwicklung und eine dazu reihenverschaltete Hilfswicklung aufweist. Die Primärwicklung ist über ein getaktetes Schaltorgan mit einem Gleichrichter des Schaltnetzteils verbunden. Die Hilfswicklung ist mit einem Kondensator reihenverschaltet und ebenfalls mit dem Gleichrichter des Schaltnetzteils gekoppelt. Der aufwändigere Aufbau des Übertragers steht hier jedoch auch einer kostengünstigen Realisierung des Schaltnetzteils entgegen.

Es ist daher eine Aufgabe der vorliegenden Erfindung, ein Schaltnetzteil der eingangs genannten Art zu schaffen, das auch in einem Ausgangsleistungsbereich von mehr als 100 W bei einfachem Aufbau hohe Leistungsfaktoren nahe 1 erzielt.

Diese Aufgabe wird durch ein Schaltnetzteil mit den Merkmalen des unabhängigen Anspruchs gelöst. Vorteilhafte Ausgestaltungen und Weiterbildungen sind Gegenstand der abhängigen Ansprüche.

Ein erfindungsgemäßes Schaltnetzteil der eingangs genannten Art zeichnet sich dadurch aus, dass das Schaltnetzteil einstufig ausgeführt ist, wobei der Abwärts-Sperrwandler eine integrierte Leistungsfaktorkorrektur aufweist und wobei parallel zu einer Primärwicklung des Übertragers eine Spannungsbegrenzungsschaltung geschaltet ist, die einen aktiven Halbleiterschalter aufweist.

Der Erfindung liegt die Erkenntnis zu Grunde, dass auch im Leistungsbereich von größer als 100 W ein einstufiger Aufbau möglich ist, wenn eine Leistungsfaktorkorrektur in den Abwärts-Sperrwandler integriert wird. Einstufig bedeutet dabei, dass das Schaltnetzteil nur eine Wandelstufe mit entsprechend nur einem getakteten Schaltorgan aufweist, nämlich den leistungsfaktorkorrigierten Abwärts-Sperrwandler. Insbesondere ist dem Abwärts-Sperrwandler keine separate PFC-Stufe mit aktiver Leistungsfaktorkorrektur vorgeschaltet. Um auch bei einer Leistung von mehr als 100 W das getaktete Schaltorgan vor Induktionsspannungen der Primärwicklung zu schützen, ist parallel zu der Primärwicklung des Übertragers eine Spannungsbegrenzungsschaltung geschaltet, die einen aktiven Halbleiterschalter aufweist. Die Spannungsbegrenzungsschaltung verhindert das Auftreten von zu hohen Sperrspannungen am getakteten Schaltorgan des Abwärts-Sperrwandlers.

Bei dem anmeldungsgemäßen Schaltnetzteil mit der relativ hohen Ausgangsleistung von mehr als 100 W ist auch die in der Streuinduktivität des Übertragers gespeicherte Energie größer. Das Absorbieren dieser Energie lässt sich mit einem aktiven Halbleiterschalter, beispielsweise einem Transistor, insbesondere einem MOSFET (Metal Oxide Semiconductor Field Effect Transistor), sehr viel leichter umsetzten als unmittelbar mit Zener- oder Transzorbdioden. Eine Zener-Diode oder eine Transzorbdiode oder allgemeiner ein Zweipol mit nichtlinearer Strom-/Spannungskennlinie ist bevorzugt zur spannungsabhängigen Ansteuerung des Halbleiterschalters in der Spannungsbegrenzungsschaltung enthalten. Dieses Element braucht dann allerdings nur für sehr geringe aufgenommene Leistungen ausgelegt sein.

In einer vorteilhaften Ausgestaltung ist eine derartige integrierte Leistungsfaktorkorrektur dadurch gegeben, dass das Schaltnetzteil einen Stromregler für einen durch eine Primärspule des Übertragers fließenden Strom aufweist, wobei ein Sollwert für den Stromregler proportional zu einer Eingangsspannung des Abwärts-Sperrwandlers vorgegeben ist.

Bevorzugt wird dabei ein Ausgang des Stromreglers einem Pulsweitenmodulations (PWM)-Generator zugeführt, der ein PWM-Signal zur Ansteuerung eines Schaltorgans erzeugt, wobei das Schaltorgan mit der Primärwicklung des Übertragers reihenverschaltet ist. Der Sollwert für den Stromregler ist sowohl proportional zu einer Sollwertvorgabe, die an einem Ausgang eines Spannungsreglers des Schaltnetzteils anliegt, als auch proportional zu der Eingangsspannung des Abwärts-Sperrwandlers. Mit anderen Worten wird die Sollwertvorgabe mit der zeitlichen Änderung der Eingangsspannung moduliert, um den eigentlichen Sollwert zu erhalten. Zur Aufmodulation des Eingangsspannungsverlaufs auf die Sollwertvorgabe weist das Schaltnetzteil bevorzugt einen Multiplizierer auf. Der Multiplizierer bestimmt den Sollwert als Produkt der Sollwertvorgabe und einer zur Eingangsspannung proportionalen Spannung.

Der Maximalwert (Peakwert) des Stroms durch den Übertrager innerhalb einer Schaltperiode des Schaltnetzteils variiert damit mit dem Zeitverlauf der Eingangsspannung des Abwärts-Sperrwandlers, die wiederum im Wesentlichen den gleichen Zeitverlauf zeigt, wie die gleichgerichtete Eingangsspannung des Schaltnetzteils. Der durch das Schaltnetzteil fließende Strom ist maßgeblich durch den Strom durch die Primärwicklung gegeben. Durch die Berücksichtigung des Eingangsspannungsverlaufs bei der Regelung des Stroms durch die Primärwicklung sind Strom- und Spannungsverlauf des Schaltnetzteils synchron, es wird ein entsprechend hoher Leistungsfaktor nahe 1 erzielt.

In einer weiteren vorteilhaften Ausgestaltung des Schaltnetzteils sind der Spannungsregler, der Multiplizierer, der Stromregler und/oder der PWM-Generator in einem Steuerbaustein integriert, bevorzugt einem Mikrocontroller. Auf diese Weise wird ein kompakter Aufbau erreicht.

In einer weiteren vorteilhaften Ausgestaltung weist das Schaltnetzteil eine Kombination aus einem Analog/Digital (A/D)-Wandler und einem nachgeschalteten Optokoppler auf, die Teil eines galvanisch getrennten Regelkreises zur Regelung einer Ausgangsspannung des Schaltnetzteils sind. Bevorzugt ist der A/D-Wandler dazu eingerichtet, Informationen über die Höhe der Ausgangsspannung als serielle Daten oder als PWM-Signal oder als Pulsfrequenzmodulations (PFM)-Signal auszugeben.

In einer weiteren vorteilhaften Ausgestaltung des Schaltnetzteils ist die Spannungsbegrenzungsschaltung dazu eingerichtet, auf eine Spannung von mehr als 100 V (Volt), z.B. auf eine Spannung zwischen 100 V und 300 V und insbesondere auf eine Spannung zwischen 140 V und 160 V, zu begrenzen. Besonders bevorzugt ist der aktive Halbleiterschalter ein p-Kanal MOSFET, da in diesem Fall der Drain-Anschluss am positiven Pol der Eingangsspannung anliegt. Üblicherweise ist der Drain-Anschluss mit einer Kühlfläche des Transistors verbunden. Im Hinblick auf gute EMV-Werte ist es günstig, wenn der Drain-Anschluss und damit die Kühlfläche nicht mit dem getaktet geschalteten Anschluss der Primärwicklung des Übertragers verbunden ist, wie es beispielsweise bei Verwendung eines n-Kanal MOSFETs der Fall wäre.

Die Erfindung wird nachfolgend anhand von Ausführungsbeispielen mit Hilfe von Figuren näher erläutert. Die Figuren zeigen:
- Figur 1: ein zweistufiges Schaltnetzteil mit Abwärts-Sperrwandler für Ausgangsleistungen größer als 100 W gemäß dem Stand der Technik ein einem schematischen Blockschaltbild;
- Figur 2: ein anmeldungsgemäßes einstufiges Schaltnetzteil für Ausgangsleistungen größer 100 W in einem schematischen Blockschaltbild; und
- Figur 3: ein detaillierteres Blockschaltbild des anmeldungsgemäßen Schaltnetzteils gemäß Figur 2.

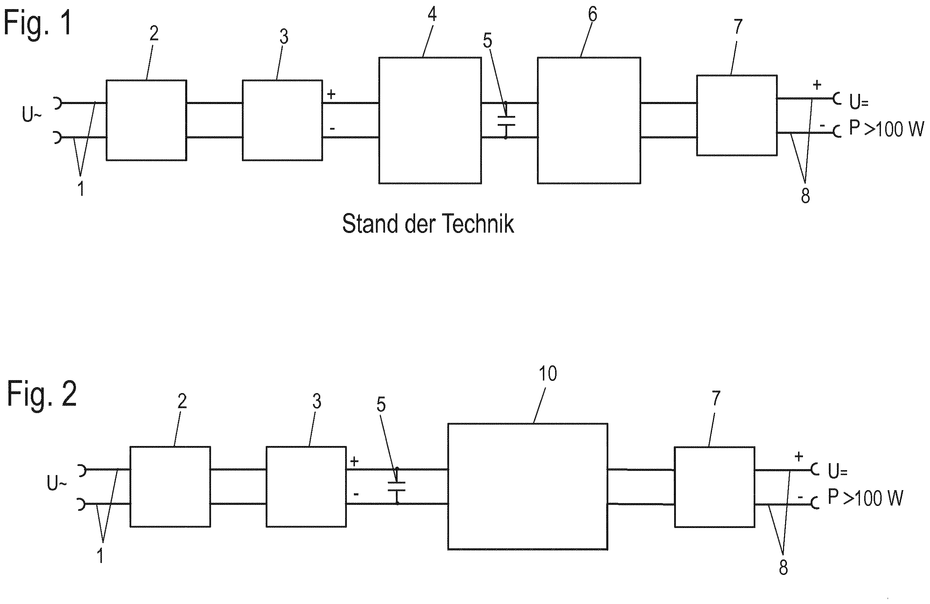

In Figur 1 ist zunächst ein für Ausgangsleistungen P von mehr als 100 W geeignetes Schaltnetzteil gemäß dem Stand der Technik in einem Blockschaltbild dargestellt.

An Eingangsanschlüssen 1 wird eine Eingangswechselspannung U_{∼} über einen EMV (Elektromagnetische Verträglichkeit) -Filter 2 einem Gleichrichter 3 zugeführt. Dem Gleichrichter 3 ist eine Leistungsfaktorkorrekturstufe 4, im Folgenden auch PFC (Power Factor Correction)-Stufe 4 genannt, nachgeschaltet.

Die PFC-Stufe 4 ist als ein Aufwärtswandler ausgebildet, der an seinem Ausgang einen Zwischenkreiskondensator 5 auf eine gegenüber der Scheitelspannung der Eingangswechselspannung U_{∼} erhöhte Gleichspannung auflädt. Der Aufwärtswandler der PFC-Stufe 4 weist ein getaktetes Schaltorgan auf, das so angesteuert wird, dass der Eingangsstrom der PFC-Stufe 4 möglichst proportional zur Eingangsspannung der PFC-Stufe 4 verläuft. Auf diese Weise wird ein hoher Leistungsfaktor nahe 1 erzielt.

Eventuell durch die PFC-Stufe 4 in Richtung der Eingangsanschlüsse 1 abgegebene höherfrequente Störungen werden durch den passiv arbeiten EMV-Filter 2, der eine Kombination aus Spulen, Kondensatoren und/oder Widerständen aufweist, möglichst heraus gefiltert.

Die von der PFC-Stufe 4 am Zwischenkreiskondensator 5 aufgebaute Spannung dient als Eingangsspannung für ein Abwärts-Sperrwandler 6, dessen Ausgangsspannung über eine Gleichrichter- und Siebstufe 7 an Ausgangsanschlüssen 8 als Ausgangsspannung U₌ des Schaltnetzteils bereit gestellt wird. In der Regel ist der Abwärts-Sperrwandler 6 als ein isolierender Wandler ausgebildet, der einen galvanisch trennenden Übertrager aufweist.

In Figur 1 dargestellte und aus dem Stand der Technik bekannte Schaltung erzielt durch die PFC-Stufe 4 einen hohen Leistungskorrekturfaktorwert, der nahe an dem idealen Wert 1 liegt.

Figur 2 zeigt in ähnlicher Weise wie in Figur 1 in einem schematischen Blockschaltbild ein anmeldungsgemäßes Schaltnetzteil, das ebenfalls für Ausgangsleistungen P von mehr als 100 W ausgelegt ist. In bevorzugten Ausgestaltungen können Ausgangsleistungen von bis zu 300 W oder auch 500 W erzielt werden.

Gleiche Bezugszeichen kennzeichnen bei Figur 2 gleiche oder gleichwirkende Elemente wie bei Figur 1.

Wiederum wird an Eingangsanschlüssen 1 eine Eingangswechselspannung U_{∼} angelegt, die über einen EMV-Filter 2 einem Gleichrichter 3 zugeführt wird. Am Ausgang des Gleichrichters 3 bereitgestellte pulsierende Gleichspannung wird in diesem Fall unmittelbar dem Zwischenkreiskondensator 5 zugeführt. Dieser Zwischenkreiskondensator 5 ist vorteilhafterweise in seiner Kapazität etwa um den Faktor 100 bis 200 kleiner als der Zwischenkreiskondensator bei dem in Fig. 1 dargestellten Netzteil gemäß dem Stand der Technik. Der Grund hierfür ist, dass der Zwischenkreiskondensator 5 bei dem anmeldungsgemäßen Netzteil die pulsierende Gleichspannung nicht über den Zeitverlauf der Netzperiode glätten muss, sondern lediglich kurze Stromimpulse innerhalb einer Schaltperiode des Schaltnetzteils abfängt. Die Schaltperiode ist mit Taktfrequenzen typischerweise über 50 kHz (Kilohertz) jedoch deutlich kürzer als die Netzperiode bei einer Netzfrequenz von 50 oder 60 Hz (Hertz).

Die am Zwischenkreiskondensator 5 anliegende Spannung dient als Eingangsspannung für einen Abwärts-Sperrwandler 10, der intern mit einer integrierten Leistungsfaktorkorrektur ausgestattet ist und daher nachfolgend als leistungsfaktorkorrigierter Abwärts-Sperrwandler 10 bezeichnet wird. Am Ausgang des leistungsfaktorkorrigierten Abwärts-Sperrwandlers 10 ist wiederrum eine Gleichricht- und Siebstufe 7 angeordnet, die an Ausgangsanschlüssen 8 die Ausgangsspannung U₌ des Schaltnetzteils bereitstellt.

An Stelle des zweistufen Ausbaus gemäß Figur 1 ist das anmeldungsgemäße Schaltnetzteil gemäß Figur 2 einstufig, da es nur eine Wandelstufe mit entsprechend nur einem getakteten Schaltorgan aufweist, nämlich den leistungsfaktorkorrigierten Abwärts-Sperrwandler 10. Durch die einstufige Bauweise können trotz einer erzielten Ausgangsleistung von mehr als 100 W gegenüber dem zweistufigen Aufbau gemäß Figur 1 Bauelemente und daher Bauraum und Kosten eingespart werden.

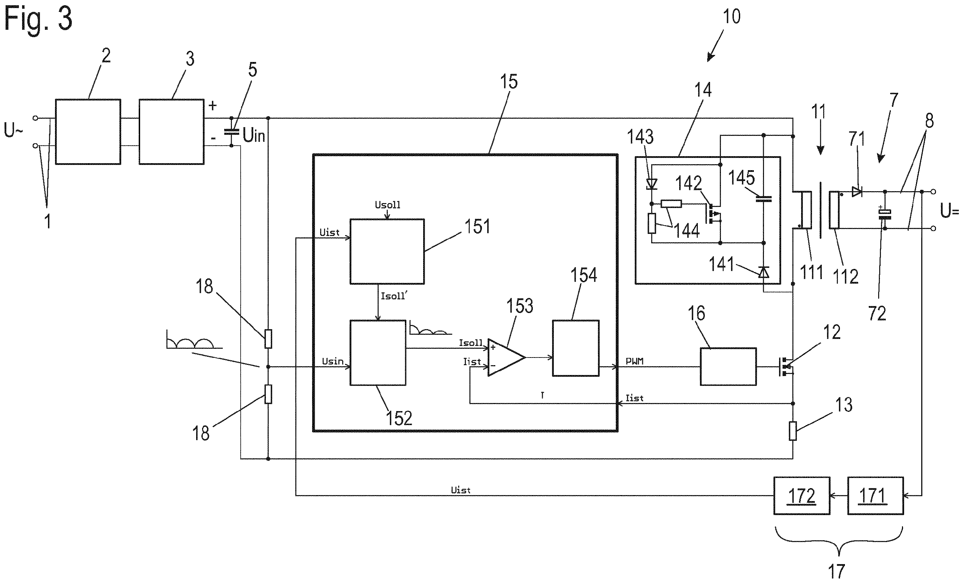

Figur 3 zeigt eine mögliche und vorteilhafte Ausgestaltung des Schaltnetzteils gemäß Figur 2 detaillierter.

Der leistungsfaktorkorrigierte Abwärts-Sperrwandler 10 umfasst einen Übertrager 11, der vorliegend mit einer Primärwicklung 111 und einer Sekundärwicklung 112 dargestellt ist. Neben den dargestellten Wicklungen 111, 112 können weitere Wicklungen vorhanden sein, beispielsweise um eine Hilfsspannung zur Versorgung von primärseitigen elektronischen Komponenten abgreifen zu können. Diese eventuell vorgesehenen weiteren Wicklungen betreffen jedoch nicht das Grundfunktionsprinzip des leistungsfaktorkorrigierten Abwärts-Sperrwandlers 10 und sind daher in dem Blockschaltbild der Figur 3 nicht wiedergegeben.

Die Primärwicklung 111 ist über ein Schaltorgan 12, vorliegend beispielhaft ein MOSFET (Metal Oxide Semiconductor Field-Effect Transistor) und einen Shunt 13, der der Strommessung dient, mit dem Zwischenkreiskondensator 5 verbunden. An der Reihenschaltung aus Primärwicklung 111, Schaltorgan 12 und Shunt 13 liegt somit eine Eingangsspannung Uin des leistungsfaktorkorrigierten Abwärts-Sperrwandlers 10 an.

Parallel zur Primärspule 111 ist eine Spannungsbegrenzungsschaltung 14 angeordnet, die induktionsbedinge Spannungsspitzen über der Primärwicklung 111 begrenzt, und das Schaltorgan 12 vor einer Zerstörung schützt. Die Spannungsbegrenzungsschaltung 14 wird weiter unten noch näher beschrieben.

Angesteuert wird das Schaltorgan 12 durch einen Steuerbaustein 15, der an einem Ausgang ein pulsweitenmoduliertes Signal (PWM-Signal) ausgibt, das verwendet wird, um das Schaltorgan 12 über einen Treiberbaustein 16 getaktet anzusteuern. Typische Taktfrequenzen liegen bei über 50 kHz. Die durch den getakteten (gepulsten) Betrieb der Primärwicklung 111 in der Sekundärwicklung 112 des Übertragers 11 induzierte Spannung wird durch eine Gleichrichterdiode 71 gleichgerichtet und mit Hilfe eines Siebkondensators 72 geglättet. Die geglättete Spannung am Siebkondensator 72 bildet die an den Ausgangsanschlüssen 8 bereitgestellte Ausgangsspannung U₌ des Schaltnetzteils. Es wird angemerkt, dass anstelle der Einweg-Gleichrichtung über die Gleichrichterdiode 71 in der Gleichricht- und Siebstufe 7 auch ein Brückengleichrichter eingesetzt werden kann. Auch eine besonders verlustfreie Gleichrichtung mit aktiv angesteuerten Halbleiterschaltern kann vorgesehen sein.

Um die Ausgangsspannung U₌ auf einen vorgegebenen Wert zu regeln, ist ein Spannungsrückkoppler 17 vorgesehen, der Informationen über die Höhe der Ausgangsspannung U₌ galvanisch getrennt dem Steuerbaustein 15 zuführt. Vorliegend umfasst die Spannungsrückkopplung 17 einen Analog/Digital (A/D)-Wandler 171, der ein digitales Ausgangssignal bereitstellt, das Informationen über die Höhe der Ausgangsspannungen U₌ enthält. Dieses digitale Signal wird über einen Optokoppler 172 galvanisch getrennt ebenfalls als digitales Signal Uist einem Digitaleingang des Steuerbausteins 15 zugeführt.

Bevorzugt wird in dem Digitalsignal Uist die absolute Höhe der Ausgangsspannung U₌ kodiert übertragen. Dieses kann in Form eines seriellen Signals oder in Form eines pulsweitenmodulierten Signals oder in Form eines pulsfrequenzmodellierten Signals geschehen. Die Übertragung der Höhe der Ausspannung U₌, und nicht nur der Information, ob eine gewünschte Höhe der Ausgangsspannung U₌ überschritten ist oder nicht, ermöglicht eine genauere und weniger schwingungsanfällige Regelung der Höhe der Ausgangsspannung U₌.

Zur Regelung der Ausgangsspannung U₌ umfasst der Steuerbaustein 15 einen Spannungsregler 151, der bevorzugt als PI (Proportional/Integral)-Regler ausgebildet ist. Neben der Information Uist über den Istwert der Höhe der Ausgangsspannung U₌ wird ein Sollwert Usoll dem Spannungsregler 151 zugeführt. An einem Ausgang des Spannungsreglers 151 wird eine Sollwertvorgabe Isoll' für einen gewünschten Strom durch die Primärwicklung 111 ausgegeben.

Zur Einstellung des Stroms durch die Primärwicklung 111 ist weiter ein Stromregler 153 im Steuerbaustein 15 angeordnet, dessen Ausgang einen PWM-Generator 154 beeinflusst, der schließlich das PWM-Steuersignal für den Treiberbaustein 16 und damit das Schaltorgan 12 ausgibt. Im Beispiel der Figur 3 ist der Stromregler 153 durch einen Vergleicher symbolisiert.

Als Besonderheit des Steuerbausteins 15 wird die Sollwertvorgabe Isoll', die der Spannungsregler 151 ausgibt, nicht unmittelbar als Sollwert dem Stromregler 153 zugeführt. Stattdessen wird in einem Multiplizierer 152 die Sollwertvorgabe Isoll' für den Strom mit einem Spannungsverlauf Usin multipliziert und das Produkt beider als Sollwert Isoll dem Stromregler 153 vorgegeben. Dieser vergleicht diesen Sollwert mit einem Strom-Istwert list, der am Shunt 13 abgegriffen wird.

Das Signal Usin ist ein zur Spannung Uᵢₙ am Zwischenkreiskondensator 5 proportionales Spannungssignal, das aus der Eingangsspannung Uᵢₙ am Zwischenkreiskondensator 5 über einen Spannungsteiler 18 gebildet wird. Das Signal Usin gibt somit den Eingangsspannungsverlauf am leistungsfaktorkorrigierten Abwärts-Sperrwandler 10 wieder. Es entspricht einer leicht geglätteten, sinusförmig pulsierenden Gleichspannung.

Die Multiplikation der Sollwertvorgabe Isoll' für den Strom mit diesem Signal bewirkt, dass der Sollwert Isoll für den Strom durch die Primärwicklung 111 den Zeitverlauf der Eingangsspannung Uᵢₙ widerspiegelt. Entsprechend variiert auch der Strom-Istwert list, also der tatsächlich durch die Primärwicklung 111 fließende Strom, im Wesentlichen proportional mit der Höhe der Eingangsspannung des leistungsfaktorkorrigierten Abwärts-Sperrwandler 10. Auf diese Weise wird die Leistungsfaktorkorrektur beim Abwärts-Sperrwandler 10 umgesetzt. Beispielhafte Zeitverläufe des Signals Usin und des entsprechend modulierten Strom-Sollwerts Isoll sind in kleinen schematischen Diagrammen an den jeweiligen Schaltungsknoten in der Figur 3 dargestellt.

Diese Korrektur stellt naturgegeben einen Eingriff in den Spannungsregelkreis des Steuerbausteins 15 dar, mit dem die Ausgangsspannung U₌ geregelt wird. Durch Berücksichtigung des Absolutwertes der Ausgangsspannung U₌ im Spannungsrückkoppler 17 wird dennoch ein gutes Spannungsregelverhalten für die Ausgangsspannung U₌ erzielt.

Vorteilhaft ist der Steuerbaustein 15 durch einen Mikrocontroller realisiert, wobei die beiden Regler, der Spannungsregler 151 und der Stromregler 153, als digital arbeiten. Der bereits im A/D-Wandler 171 digitalisierte Istwert Uist der Ausgangsspannung U₌ kann unmittelbar eingelesen werden. Analog vorliegende Werte wie der Verlauf der Eingangsspannung Uin am Zwischenkreiskondensator 5 oder der Strom-Istwert list werden vor der Verarbeitung in A/D-Wandlern des Steuerbausteins 15 digitalisiert.

Wie bereits erwähnt wurde, dient die parallel zur Primärwicklung 111 angeordnete Spannungsbegrenzungsschaltung 14 dazu, Spannungsspitzen über der Primärwicklung 111 zu verhindern. Zu diesem Zweck muss die Spannungsbegrenzungsschaltung 14 in der Lage sein, die in einer Streuinduktivität des Übertragers 11 gespeicherte Energie aufzunehmen.

Bedingt durch die gegenüber bekannten einstufigen Schaltnetzteilen relativ hohe Ausgangsleistung P von mehr als 100 W ist auch die von der Spannungsbegrenzungsschaltung 14 aufzunehmende Leistung größer. Um diese Leistung dennoch aufnehmen zu können, weist die Spannungsbegrenzungsschaltung 14 in Reihenschaltung mit einer Diode 141 einen aktiven Halbleiterschalter 142 als aktiv geschaltetes Element auf. Angesteuert wird der Halbleiterschalter 142 über ein Netzwerk, das eine Zenerdiode 143 und Widerstände 144 umfasst. Durch Verwendung des Halbleiterschalters 142 kann auf einfache Weise eine höhere Leistung aufgenommen werden, als es durch die direkte Verwendung von Zener- oder Transzorb-Dioden möglich wäre. Bevorzugt wird als aktiver Halbleiterschalter 142 ein p-Kanal MOSFET eingesetzt, da in diesem Fall der Drain-Anschluss des Transistors am positiven Pol der Eingangsspannung Uin anliegt. Üblicherweise ist der Drain-Anschluss mit einer Kühlfläche des Transistors verbunden. Im Hinblick auf gute EMV-Werte ist es günstig, wenn der Drain-Anschluss - und damit die Kühlfläche - auf einem relativ fest liegenden Potential liegt und nicht (über die Diode 141) mit dem Schaltorgan 12 bzw. dem getaktet geschalteten Anschluss der Primärwicklung 111 des Übertragers 11 verbunden ist. Letztere wäre beispielsweise bei Verwendung eines n-Kanal MOSFETs der Fall. Bei dem dargestellten Beispiel begrenzt die Spannungsbegrenzungsschaltung 14 die an dem Schaltorgan 12 anliegende Spannung auf etwa 150 V.

Parallel zum Halbleiterschalter 142 ist zudem ein Kondensator 145 angeordnet, der kurzzeitige Induktions-Spannungsspitzen der Primärwicklung 111 des Übertragers 11 glättet. Die von dem Kondensator 145 kurzzeitig aufgenommene Energie wird dann ebenfalls von dem Halbleiterschalter 142 absorbiert.

### Bezugszeichenliste

- 1: Eingangsanschlüsse
- 2: EMV-Filter
- 3: Gleichrichter
- 4: Leistungsfaktorkorrekturstufe (PFC-Stufe)
- 5: Zwischenkreiskondensator
- 6: Abwärts-Sperrwandler
- 7: Gleichricht- und Siebstufe
- 71: Gleichrichterdiode
- 72: Siebkondensator
- 8: Ausgangsanschlüsse

- 10: leistungsfaktorkorrigierter Abwärts-Sperrwandler
- 11: Übertrager
- 111: Primärwicklung
- 112: Sekundärwicklung
- 12: Schaltorgan
- 13: Shunt
- 14: Spannungsbegrenzerschaltung
- 141: Diode
- 142: Schaltorgan
- 143: Zener-Diode
- 144: Widerstand
- 145: Kondensator
- 15: Steuerbaustein
- 151: Spannungsregler
- 152: Multiplizierer
- 153: Stromregler
- 154: Pulsweitenmodulator
- 16: Treiberbaustein
- 17: Spanungsrückkopplungsschaltung
- 171: A/D-Wandler
- 172: Optokoppler
- 18: Spannungsteiler

## Patentansprüche

1. Schaltnetzteil mit einem Abwärts-Sperrwandler (10) mit einem Übertrager (11) für Ausgangsleistungen von mehr als 100 Watt, **dadurch gekennzeichnet, dass**
das Schaltnetzteil einstufig ausgeführt ist, wobei der Abwärts-Sperrwandler (10) eine integrierte Leistungsfaktorkorrektur aufweist und wobei parallel zu einer Primärwicklung (111) des Übertragers (11) eine Spannungsbegrenzungsschaltung (14) geschaltet ist, die einen aktiven Halbleiterschalter (142) aufweist.

2. Schaltnetzteil nach Anspruch 1, aufweisend einen Stromregler (153) für einen durch die Primärspule (111) des Übertragers (11) fließenden Strom, wobei ein Sollwert (Isoll) für den Stromregler (153) proportional zu einer Eingangsspannung (Uin) des Abwärts-Sperrwandlers (10) vorgegeben ist.

3. Schaltnetzteil nach Anspruch 2, bei dem der Sollwert (Isoll) proportional zu einer Sollwertvorgabe (Isoll') ist, der an einem Ausgang eines Spannungsreglers (151) des Schaltnetzteils anliegt.

4. Schaltnetzteil nach Anspruch 2 und 3, aufweisend einen Multiplizierer (152), um den Sollwert (Isoll) für den Stromregler (153) als Produkt der Sollwertvorgabe (Isoll') und einer zur Eingangsspannung (Uin) proportionalen Spannung (Usin) zu bestimmen.

5. Schaltnetzteil nach einem der Ansprüche 2 bis 4, bei dem ein Ausgang des Stromreglers einem PWM-Generator (154) zugeführt wird, der ein PWM-Signal zur Ansteuerung eines Schaltorgans (12) erzeugt, wobei das Schaltorgan (12) mit der Primärwicklung (111) des Übertragers (11) reihenverschaltet ist.

6. Schaltnetzteil nach einem der Ansprüche 1 bis 5, bei dem der Spannungregler (151), der Multiplizierer (152), der Stromregler (153) und/oder der PWM-Generator (154) in einem Steuerbaustein (15) integriert sind, bevorzugt einem Mikrocontroller.

7. Schaltnetzteil nach einem der Ansprüche 1 bis 6, aufweisend eine Kombination aus einem Analog/Digital-Wandler (171) und einen nachgeschalteten Optokoppler (172) als Teil eines galvanisch getrennten Regelkreises zur Regelung einer Ausgangsspannung (U₌) des Schaltnetzteils.

8. Schaltnetzteil nach Anspruch 7, bei dem der A/D-Wandler (171) Informationen über die Höhe der Ausgangsspannung (U₌) als serielle Daten oder als PWM-Signal oder als PFM-Signal ausgibt.

9. Schaltnetzteil nach einem der Ansprüche 1 bis 8, bei dem die Spannungsbegrenzungsschaltung (14) auf eine Spannung von mehr als 100 Volt begrenzt.

10. Schaltnetzteil nach Anspruch 9, bei dem die Spannungsbegrenzungsschaltung (14) auf eine Spannung zwischen 140 Volt und 160 Volt begrenzt.

11. Schaltnetzteil nach einem der Ansprüche 1 bis 10, bei dem der aktive Halbleiterschalter (142) ein p-Kanal MOSFET ist.

12. Schaltnetzteil nach einem der Ansprüche 1 bis 11, bei dem die Spannungsbegrenzungsschaltung (14) einen nichtlinearen Zweipol zur spannungsabhängigen Ansteuerung des Halbleiterschalters (142) umfasst.

13. Schaltnetzteil nach Anspruch 12, bei dem der Zweipol mit nichtlinearer Strom-/Spannungskennlinie eine Zener-Diode (143) oder eine Transzorbdiode ist.
